# EUROPEAN PATENT SPECIFICATION

(11) **EP 2 796 567 B1**
(45) Date of publication and mention of the grant of the patent: **20.09.2017**
(21) Application number: 12859760.6
(22) Date of filing: 11.10.2012
(51) Int. Cl.: C21B 13/00, C21B 13/14, C21B 5/00, C21B 5/02, C21B 7/16

(54) **TUYERE ASSEMBLY AND MOLTEN IRON MANUFACTURING APPARATUS USING SAME**
DÜSENANORDNUNG UND VORRICHTUNG ZUR HERSTELLUNG VON GESCHMOLZENEM EISEN DAMIT
ENSEMBLE TUYÈRE ET APPAREIL DE FABRICATION DE FER FONDU L'UTILISANT

(30) Priority: 22.12.2011 KR 20110140220
(43) Date of publication of application: 29.10.2014
(73) Proprietor: Posco, Gyeongsangbuk-do 790-300 (KR)
(72) Inventor: CHOI, Eung-Soo, Pohang-si Gyeongsangbuk-do 790-300 (KR); HEOR, Geum-Sik, Pohang-si Gyeongsangbuk-do 790-300 (KR); BAE, Jin-Chan, Pohang-si Gyeongsangbuk-do 790-300 (KR)
(74) Representative: Potter Clarkson LLP
(86) International application number: PCT/KR2012/008242
(87) International publication number: WO 2013/094862

(56) References cited:
- WO-A1-2006/011774
- WO-A2-2009/028909
- WO-A2-2009/082122
- WO-A2-2010/108880
- KR-A- 20030 055 357
- KR-A- 20050 054 849
- KR-A- 20090 023 002
- KR-A- 20090 068 394
- US-A1- 2011 101 576

## Description

### [Technical Field]

The present invention relates to an apparatus for manufacturing an ingot iron, and more particularly, to a tuyere assembly including a fuel blow tube for blowing an auxiliary fuel to a melting gasifier, and an apparatus for manufacturing an ingot iron using the same.

### [Background Art]

Recently, a smelting reduction steelmaking process replacing a blast furnace process has been developed as a method of manufacturing an ingot iron. In the smelting reduction steelmaking process, a coal for general use is directly used as a fuel and a reducing agent, and an iron ore is directly used as an iron source to manufacture the ingot iron. In the smelting reduction steelmaking process, a reduction furnace reducing the iron ore and a melting gasifier melting the iron ore are separately provided. Accordingly, the iron ore is reduced by a reduction gas in the reduction furnace and then melted in the melting gasifier to manufacture the ingot iron.

In the melting gasifier, oxygen is blown to combust a coal filling layer in the melting gasifier. A tuyere assembly for oxygen blowing is installed in a side of the melting gasifier. The coal filling layer is combusted by oxygen blown into the melting gasifier, and the iron ore charged into the melting gasifier is melted by this combustion heat to manufacture the ingot iron.

An auxiliary fuel may be blown into the melting gasifier through a tuyere to increase internal combustion heat of the melting gasifier and the like.

The auxiliary fuel may be blown into the furnace through a gas blow flow channel of the tuyere into which oxygen is blown, or may be separated from oxygen to be blown through a separate tube channel.

In the case where the auxiliary fuel and oxygen are blown through the gas blow flow channel into the furnace, since combustion of the auxiliary fuel is violently performed at a front end of the tuyere, there is a high concern of damage at a front end portion of the tuyere.

On the contrary, in the case where the auxiliary fuel and oxygen are blown through separate tube channels into the furnace, the auxiliary fuel and oxygen may meet each other at a position that is spaced apart from the front end of the tuyere to be combusted, and thus damage to the tuyere may be reduced. In the case where a combustion focus that is a point at which the auxiliary fuel and oxygen meet each other to be combusted becomes far away from the front end of the tuyere, the case is advantageous to prevent damage of the tuyere.

On the contrary, in view of combustion efficiency of the auxiliary fuel, a reduction in distance ranging from the front end of the tuyere to the combustion focus in order to allow the auxiliary fuel and oxygen blown into the furnace to meet each other as soon as possible is advantageous. In order to reduce a combustion focus distance, an angle of the tube channel into which the auxiliary fuel is blown should be increased. If the angle of the tube channel is increased to a predetermined value or more, since the tube channel deviates from the tuyere, an interference phenomenon with the tuyere occurs. This serves as a main limitation condition in a reduction in combustion focus.

As described above, if the combustion focus is not sufficiently reduced and becomes far away from the front end of the tuyere to move to a center of a raceway, an amount of the auxiliary fuel escaping from the raceway before the auxiliary fuel is completely combusted is increased. Accordingly, there is a problem in that the uncombusted auxiliary fuel is accumulated in the furnace.

If the amount of the uncombusted auxiliary fuel is increased, a loss amount of the fuel is increased, and air permeability and liquid permeability in the melting gasifier are reduced which causes tapping aggravating a situation in the furnace.

WO 2009/082122 A2 discloses a tuyere assembly installed at a melter-gasifier for forming melted iron. The tuyere assembly includes a tuyere, where a gas passage is used for injecting an oxygen-containing gas into the melter-gasifier, and a pair of fuel injection lines spaced apart from each other. The injection lines are also spaced apart from the gas passage to pass through the tuyere. The injection lines inject an auxiliary fuel into the melter-gasifier.

WO 2006/011774 A1 discloses an apparatus for and method of manufacturing molten iron by injecting fine carbonaceous materials into a melter-gasifier. The method for manufacturing molten iron includes steps of (i) reducing mixtures containing iron ores in a reduction reactor and converting the mixtures containing iron ores into reduced materials, (ii) preparing lumped carbonaceous materials containing volatile matters as a heating source for melting the reduced materials, (iii) charging the lumped carbonaceous materials into a dome-shaped upper portion of a melter-gasifier and forming a coal packed bed, (iv) preparing fine carbonaceous materials containing volatile matter as a heating source for melting the reduced materials, (v) injecting oxygen and the fine carbonaceous materials into the coal packed bed through a tuyere installed in the melter-gasifier, (vi) charging the reduced materials into the melter-gasifier connected to the reduction reactor and manufacturing molten iron, and (vii) supplying reducing gas in the melter-gasifier made from volatile matter contained both in the lumped carbonaceous materials and the fine carbonaceous materials to the reduction reactor.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a tuyere assembly constituted so as to further reduce a combustion focus distance without an interference with a tuyere to improve combustion efficiency of an auxiliary fuel, and an apparatus of manufacturing an ingot iron using the same.

Further, the present invention has been made in an effort to provide a tuyere assembly constituted so as to minimize abrasion of a tube channel according to blowing of the auxiliary fuel, and an apparatus of manufacturing an ingot iron using the same.

Further, the present invention has been made in an effort to provide a tuyere assembly constituted so as to further easily and rapidly detect damage when the tube channel for blowing the auxiliary fuel is damaged, and an apparatus of manufacturing an ingot iron using the same.

### [Technical Solution]

An exemplary embodiment of the present invention provides a tuyere assembly installed in a melting gasifier for manufacturing an ingot iron, including: a gas blow flow channel blowing an oxygen-containing gas into the melting gasifier; and a fuel blow tube installed to be spaced apart from the gas blow flow channel and blowing an auxiliary fuel into the melting gasifier, wherein the tuyere assembly includes a small tuyere disposed to be adjacent to an inside of the melting gasifier and a large tuyere disposed to be adjacent to an outside of the melting gasifier, wherein the fuel blow tube includes a first tube inserted into the small tuyere, in which a portion of the first tube protrudes in a large tuyere direction; and a second tube inserted into the large tuyere and connected to a protrusion portion of the first tube, wherein the second tube is connected to the protrusion portion of the first tube, and is connected in an internal space of the large tuyere by a flange or a socket, wherein the flange or the socket forms a pivoting point between the first tube and the second tube.

Further, the second tube may be a straight-line type or a curve type.

An angle formed by the first tube and the gas blow flow channel may be an acute angle.

The second tube may be connected to the protrusion portion of the first tube, and may have a straight-line section straightly formed at a connection portion.

A curvature radius of the second tube may be gradually decreased from an end point of a straight-line portion to an external front end of the large tuyere.

The second tube may include a protection tube having a structure which surrounds an external circumferential portion of the second tube to be spaced apart and is sealed from the outside.

In the protection tube, a manometer for detecting an internal pressure or a thermometer detecting an internal temperature of the protection tube may be formed.

On an interior circumferential surface of the second tube, an abrasion resistant liner may be formed.

The auxiliary fuel may be at least one selected from the group consisting of a powdered coal, a natural gas, a synthetic gas, a coke oven gas (COG), a converter exhaust gas (LDG), a blast furnace exhaust gas (BFG), a FINEX exhaust gas (FOG), a COREX exhaust gas, a waste plastic, RDF, and RPF.

Another exemplary embodiment of the present invention provides an apparatus for manufacturing an ingot iron, the apparatus comprising a tuyere assembly according to the invention as defined herein, the apparatus further including: a reduction furnace converting an iron ore-containing mixture into a reduced material by reduction; a coal supply apparatus supplying an agglomerating breeze as a heat source melting the reduced material; a melting gasifier connected to the reduction furnace to charge the reduced material thereinto, connected to the coal supply apparatus to charge the agglomerating breeze thereinto, and manufacturing the ingot iron by blowing oxygen and an auxiliary fuel through the tuyere assembly installed in a side thereof; and a reduction gas supply tube supplying a reduction gas which is generated from a volatile matter included in the agglomerating breeze and the auxiliary fuel in the melting gasifier to the reduction furnace.

The tuyere assembly may be the tuyere assembly having the aforementioned constitution.

The coal supply apparatus may include a coal briquette manufacturing apparatus supplying a coal briquette manufactured by molding a fine coal.

Further, the coal briquette manufacturing apparatus may include a fine coal storage bin storing the fine coal, a mixer connected to the fine coal storage bin to receive a molasses binder and perform mixing to form a mixed coal, and a molding machine connected to the mixer to mold the mixed coal to manufacture the coal briquette.

The coal briquette manufacturing apparatus may further include a binder bin providing the molasses binder, and a curing agent bin supplying one or more curing agents selected from the group consisting of quick lime, slaked lime, limestone, calcium carbonate, cement, bentonite, clay, silica, silicate, dolomite, phosphoric acid, sulfuric acid, and oxide in addition to the binder bin, and the binder bin and the curing agent bin may be connected to the mixer.

The apparatus of manufacturing an ingot iron may further include: an agglomerating body manufacturing apparatus connected to the reduction furnace to agglomerate the reduced material, in which an agglomerating body manufactured in the agglomerating body manufacturing apparatus may be supplied to the melting gasifier.

The reduction furnace may be sequentially connected multi-stage fluidized-reduction furnaces.

The reduction furnace may be a filling layer type reduction furnace.

### [Advantageous Effects]

According to a tuyere assembly of an apparatus of manufacturing an ingot iron according to the present invention, it is possible to improve combustion efficiency of an auxiliary fuel by allowing a combustion focus of the auxiliary fuel to approach a front end of a tuyere as close as possible.

Further, when the auxiliary fuel is blown into a melting gasifier, it is possible to reduce damage of a blow tube and increase a life-span of the tuyere assembly.

### [Description of the Drawings]

FIG. 1 is a schematic cross-sectional view illustrating a tuyere assembly of equipment of manufacturing an ingot iron according to an exemplary embodiment of the present invention.
FIG. 2 is a view illustrating a constitution of a fuel blow tube in the tuyere assembly of FIG. 1 in more detail.
FIG. 3 is a view illustrating a tuyere assembly according to a modified exemplary embodiment of FIG. 1, in which a second tube of a fuel blow tube is formed in a curve type.
FIG. 4 is a view illustrating a constitution of the fuel blow tube in the tuyere assembly of FIG. 3 in more detail.
FIG. 5 is a view illustrating a straight-line portion of the fuel blow tube in the tuyere assembly of FIG. 3 in detail.
FIG. 6 illustrates a constitution of an apparatus of manufacturing an ingot iron according to another exemplary embodiment of the present invention, and the apparatus of manufacturing the ingot iron includes a multi-stage fluidized-reduction furnace, a melting gasifier to which the tuyere assembly of the present invention is applied, a coal briquette manufacturing apparatus, and an agglomerating body manufacturing apparatus.
FIG. 7 illustrates a constitution of an apparatus of manufacturing an ingot iron according to another exemplary embodiment of the present invention, and the apparatus of manufacturing the ingot iron includes a filling layer type reduction furnace, a melting gasifier to which the tuyere assembly of the present invention is applied, and a coal briquette manufacturing apparatus.
FIGS. 8 and 9 are graphs illustrating comparison of a powdered coal blowing amount and a molten iron production amount of the tuyere assembly according to the present invention and those of an existing art.

### [Mode for Invention]

The present invention will be described more fully hereinafter with reference to the accompanying drawings, in which exemplary embodiments of the invention are shown. As easily understood by the person with ordinary skill in the art to which the present invention pertains, the exemplary embodiments which will be described below may be variously modified without departing from the scope of the present invention. If possible, the same or similar portions are represented by using the same reference numerals in the drawings.

The terminologies used herein are set forth just to illustrate a specific exemplary embodiment but not to limit the present invention. It must be noted that, as used in the specification and the appended claims, the singular forms include plural reference forms unless the context clearly dictates otherwise. It will be further understood that the terms "comprises" and/or "comprising," when used in this specification, specify the presence of stated properties, regions, integers, steps, operations, elements, and/or components, but do not preclude the presence or addition of one or more other properties, regions, integers, steps, operations, elements, components, and/or groups.

All terms including technical terms and scientific terms used herein have the same meaning as the meaning generally understood by the person with ordinary skill in the art to which the present invention pertains. The terminologies that are defined previously are further understood to have the meaning that coincides with relating technical documents and the contents that are disclosed currently, but not interpreted as the ideal or very official meaning unless it is defined.

An inside of a melting gasifier used in the specification is set forth just to illustrate the use of a tuyere assembly, but usage of the tuyere assembly is not limited thereto. Accordingly, the tuyere assembly is construed to include both the tuyere assembly before installed in the melting gasifier and the tuyere assembly installed in the melting gasifier.

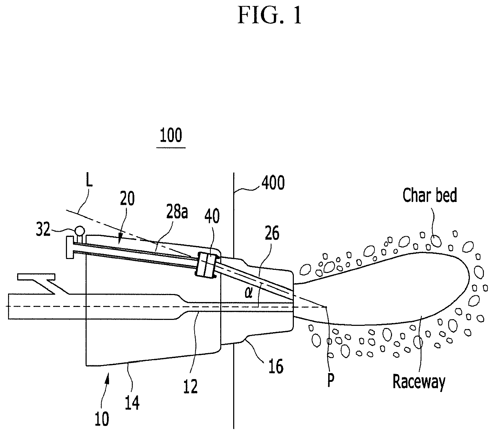

As illustrated in FIG. 1, a tuyere assembly 100 according to an exemplary embodiment of the present invention is installed in the melting gasifier for manufacturing an ingot iron, and includes a gas blow flow channel 12 blowing an oxygen-containing gas into the melting gasifier, and a fuel blow tube 20 installed to be spaced apart from the gas blow flow channel 12 and blowing an auxiliary fuel into the melting gasifier, and the fuel blow tube 20 includes two tubes connected to each other.

The tuyere assembly 100 includes a small tuyere 16 disposed to be adjacent to an inside of the melting gasifier and a large tuyere 14 disposed to be adjacent to an outside of the melting gasifier. In the inside of the melting gasifier, the oxygen-containing gas and the auxiliary fuel blown from the outside meet each other to cause combustion.

The large tuyere 14 and the small tuyere 16 may have a single structure, and may be separated from and combined with each other.

In the tuyere assembly 100, a coolant channel may be formed so as to circulate cooling water therein. Particularly, the small tuyere 16 protrudes to the inside of the melting gasifier to be exposed to high temperatures. Cooling water flowing through the coolant channel cools the tuyere assembly 100 to protect the tuyere assembly 100 from high heat.

Since other contents regarding cooling of the tuyere can be easily understood by a person with ordinary skill in the art to which the present invention belongs, a detailed description thereof will be omitted.

The gas blow flow channel 12 is formed through the center of the tuyere assembly 100. The oxygen-containing gas blown from the outside of the melting gasifier is blown through the gas blow flow channel 12 into the melting gasifier.

In formation of the gas blow flow channel, a portion of the small tuyere 16 may have a structure where a tube is not inserted into the small tuyere 16 but a hole that is a blow flow channel is directly formed, and a portion of the large tuyere 14 may have a structure where a blowpipe is inserted into the center of the large tuyere 14 and the blowpipe in the large tuyere 14 is compress-fastened with a portion facing the small tuyere 16 when the small tuyere 16 and the large tuyere 14 are combined.

Herein, the oxygen-containing gas means an oxygen gas or all gases including oxygen. Accordingly, in addition to oxygen, oxygen-containing hot wind may be blown through the gas blow flow channel 12.

The fuel blow tube 20 is a matter for blowing the auxiliary fuel through the tuyere assembly 100, and is disposed to be spaced apart from the gas blow flow channel 12. In the case where the fuel blow tube 20 meets the gas blow flow channel 12 in the tuyere assembly 100, the auxiliary fuel supplied through the fuel blow tube 20 may be reacted with the oxygen-containing gas supplied through the gas blow flow channel 12 in the tuyere assembly 100 to melt the tuyere assembly 100 and thus damage the tuyere assembly 100.

Accordingly, it is preferable that the fuel blow tube 20 and the gas blow flow channel 12 be spaced apart from each other.

As for the auxiliary fuel, a powdered coal, a hydrocarbon-containing gas, or the like may be used. The powdered coal means particles containing carbon and having a particle size of about 3 mm or less. Examples of the hydrocarbon-containing gas may include a natural gas such as a liquefied natural gas (LNG) or a liquefied petroleum gas (LPG), or a synthetic gas.

Further, the auxiliary fuel may include a coke oven gas (COG) discharged from a coke manufacturing furnace, an exhaust gas (blast furnace gas; BFG) discharged from a blast furnace, an exhaust gas (LDG) discharged from a converter process, an exhaust gas (FINEX off gas; FOG) of a FINEX process where an ingot iron is manufactured by using a multi-stage fluidized-reduction furnace and a melting gasifier and using a fine iron ore and a fine coal, an exhaust gas of a COREX process where an ingot iron is manufactured by using a shaft furnace and a melting gasifier and using a lump ore and a fine coal or a lump coal, waste plastics, a RDF (refuse derived fuel), or a RPF (refuse plastic fuel).

The exhaust gas of the FINEX process includes an exhaust gas discharged from the fluidized-reduction furnace and an exhaust gas discharged from the melting gasifier.

Further, the exhaust gas of the COREX process includes an exhaust gas discharged from the shaft furnace and an exhaust gas discharged from the melting gasifier.

The auxiliary fuel is blown into the melting gasifier to increase combustion heat. Accordingly, an amount of coal charged from an upper portion of the melting gasifier may be reduced. Further, since the auxiliary fuel generates a large amount of reduction gas, an iron ore may be easily reduced.

Further, since the coal charged from the upper portion of the melting gasifier may be combusted before approaching a lower portion of the melting gasifier, a state of the lower portion of the melting gasifier may be unsuitable to manufacture the ingot iron.

Accordingly, the state of the lower portion of the melting gasifier may be improved by blowing the auxiliary fuel from the lower portion of the melting gasifier.

One or more fuel blow tubes 20 may be provided in the tuyere assembly 100.

The fuel blow tube 20 is connected to a fuel supply tube (not illustrated) outside the tuyere assembly 100. The auxiliary fuel supplied from the fuel supply tube (not illustrated) is blown through the fuel blow tube 20 from a front end of the tuyere assembly 100 into the melting gasifier.

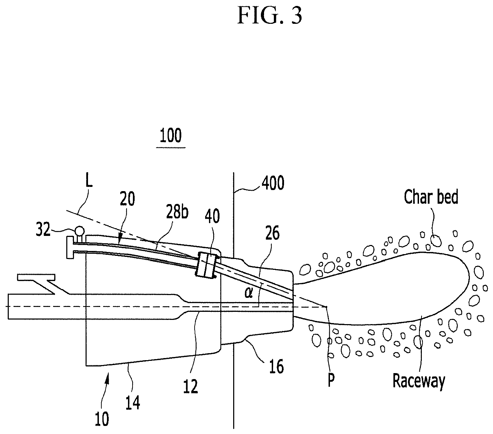

Referring to FIG. 1 or 3, the fuel blow tube 20 includes a first tube 26 inserted into the small tuyere 16 and partially protruding into the large tuyere 14 adjacent to the small tuyere 16, and second tubes 28a and 28b inserted into the large tuyere 14 and connected to the first tube 26 in the large tuyere 14.

The first tube 26 constituting the fuel blow tube 20 is a straight-line type, and the second tubes 28a and 28b are the straight-line type or a curve type.

FIG. 1 is a view illustrating an exemplary embodiment where the second tube 28a constituting the fuel blow tube 20 is formed in the straight-line type, and FIG. 3 is a view illustrating an exemplary embodiment where the second tube 28b is formed in the curve type.

The first tube 26 and the second tubes 28a and 28b are connected by a flange 40 or a socket at a rear end of the small tuyere 16 (in other words, a place that is close to the large tuyere 14 of an interfacial surface of the small tuyere 16 and the large tuyere 14).

An angle formed by the first tube 28 and the gas blow flow channel 12 is an acute angle. That is, the angle formed by an imaginary extension direction of a central line of the first tube 26 and an imaginary extension direction of a central line of the gas blow flow channel 12 forms the acute angle.

An imaginary extension line of the central line of the first tube 26 and an imaginary extension line of the central line of the gas blow flow channel 12 meet in the melting gasifier 400, and a combustion focus is formed at a place at which the two imaginary lines meet.

A spray direction of the auxiliary fuel through the first tube 26 and a spray direction of the oxygen-containing gas through the gas blow flow channel 12 form an acute angle α by inserting the first tube 26 into the tuyere assembly 100 at the aforementioned angle.

The central line of the gas blow flow channel 12 may be identical with a central axis line of the tuyere assembly 100.

As illustrated in FIG. 1, a char bed formed of the coal or the coke is positioned at a front end of the tuyere assembly 100. If the oxygen-containing gas is blown through the gas blow flow channel 12, a raceway is formed in the char bed. In addition, the oxygen-containing gas and the auxiliary fuel blown through the fuel blow tube 20 disposed at the acute angle to the central line of the gas blow flow channel 12 meet in the raceway to be combusted.

The acute angle formed by the first tube 26 to the gas blow flow channel 12 affects a position of the combustion focus P, which is a place at which the oxygen-containing gas and the auxiliary fuel meet to be combusted.

In the case where the acute angle α is small, the combustion focus becomes far away from the front end of the tuyere assembly 100. Accordingly, the auxiliary fuel sprayed from the fuel blow tube 20 may not meet well the oxygen-containing gas sprayed from the gas blow flow channel 12. Accordingly, ignition of the auxiliary fuel may be delayed to reduce combustion efficiency of the auxiliary fuel.

Meanwhile, in the case where the acute angle α is large, a distance between the front end of the inside of the tuyere assembly 100 and the combustion focus P is reduced. Accordingly, the auxiliary fuel meets the oxygen-containing gas right ahead the front end of the tuyere assembly 100 to perform ignition. Accordingly, combustion of the auxiliary fuel may be promoted to increase combustion efficiency.

In the present invention, the first tube 26 is disposed in the tuyere assembly 100 so as to maximize the acute angle α. To this end, when the first tube 26 extends in a central axis direction thereof, the first tube 26 forms the acute angle with respect to the gas blow flow channel 12 at an angle deviating from an external circumferential surface of the tuyere assembly 100.

As described above, the combustion focus may be formed at a position maximally close to the tuyere assembly 100 in the melting gasifier by increasing the acute angle so that the first tube 26 deviates from the tuyere.

Herein, the combustion focus P may be positioned at a front end side of the tuyere assembly 100 by increasing the acute angle of the first tube 26, but if the acute angle is increased, a phenomenon where the fuel blow tube 20 deviates from the tuyere assembly 100 may occurs like a dotted line L illustrated in FIG. 1.

In the present invention, even though the fuel blow tube 20 is inclined at an angle where a virtual extension line of the first tube 26 deviates from the external circumferential surface of the tuyere assembly 100 by increasing the acute angle of the first tube 26, the fuel blow tube 20 may not deviate from the tuyere assembly 100 but may be positioned in the tuyere assembly 100 by forming the separate second tubes 28a and 28b connected to the first tube 26 in the straight-line type or the curve type.

Meanwhile, the fuel blow tube 20 may be abraded by a flow of powder flowing along a tube channel.

In order to prevent the fuel blow tube 20 from being abraded, materials and thicknesses of the second tubes 28a and 28b and the first tube 26 may be different from each other. Particularly, in the case where the second tube 28a is formed in a straight-line type, abrasion of the fuel blow tube 20, as illustrated in FIG. 1, intensively occurs in the second tube 28a, and thus the second tube 28a may be formed of an abrasion resistant material unlike the first tube 26.

For example, the second tubes 28a and 28b may be entirely or partially formed of the abrasion resistant material such as high nickel steel, high chrome steel, or ceramics.

Further, a liner may be further formed in order to prevent interior circumferential surfaces of the second tubes 28a and 28b from being abraded. The liner may be formed of a steel or ceramic material having abrasion resistance.

Further, the thicknesses of the second tubes 28a and 28b may be larger than that of the first tube 26. Since the large tuyere 14 in which the second tubes 28a and 28b are positioned is larger than the small tuyere 16 and thus has a sufficient internal available space, damage by abrasion of the second tubes 28a and 28b may be minimized by making the thicknesses of the second tubes 28a and 28b and the first tube 26 different or installing the liner.

The flange 40 or the socket may be installed between the first tube 26 and the second tubes 28a and 28b to easily combine the two tubes.

The flange 40 or the socket connects the first tube 26 and the second tubes 28a and 28b, and clog cracks at a connection place to maintain air-tightness. The flanges 40 may be perforated therein, an end of each of the flanges 40 may be bound to first tube 26 and the second tubes 28a and 28b, and the flanges may come into contact with each other, and then combined by a bolt and the like. A gasket and the like may be interposed between the flange 40 and the flange 40.

In the case where the socket is used to connect the first tube 26 and the second tubes 28a and 28b, female threads may be processed on interior circumferential surfaces of both front ends of the socket, and the first tube 26 and the second tubes 28a and 28b may be screwed to each other.

Any structure may be applied to the flange 40 or the socket as long as the structure connects the first tube 26 and the second tubes 28a and 28b while maintaining air-tightness, and is not particularly limited.

In this case, the flange 40 or the socket connects the first tube 26 and the second tubes 28a and 28b at a place that is adjacent to an internal front end of the large tuyere 14 in the large tuyere 14 (in other words, a place that is close to the large tuyere 14 at the interfacial surface of the small tuyere 16 and the large tuyere 14).

In other words, the flange 40 or the socket connects the first tube 26 and the second tubes 28a and 28b at an external front end of the small tuyere 16, that is, a place that is close to the large tuyere 14 in an outer direction of the melting gasifier at the interfacial surface of the small tuyere 16 and the large tuyere 14.

The small tuyere 16 into which the first tube 26 is inserted has a small size and includes the coolant channel, and thus in the case where the flange and the like are installed, interference with the coolant channel may occur. Accordingly, an end of the first tube 26 passes through a connection portion of the small tuyere 16 and the large tuyere 14 and extends in a direction of the large tuyere 14 to have a predetermined length, and thus is connected to an end of each of the second tubes 28a and 28b via the flange 40 or the socket in the large tuyere 14.

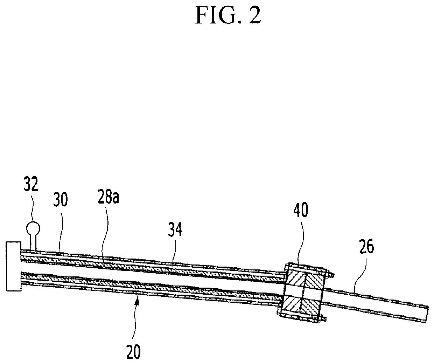

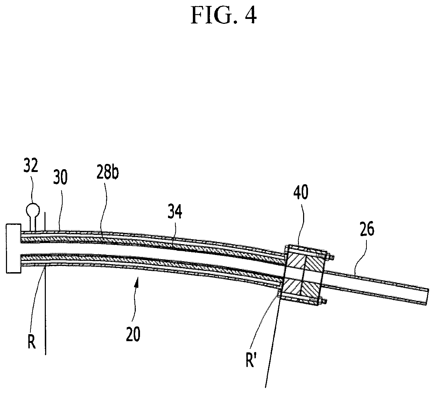

FIGS. 2 and 4 are views illustrating constitutions of the fuel blow tubes in the tuyere assemblies of FIGS. 1 and 3 in more detail.

In the present invention, in the case where the fuel blow tube 20 is damaged due to abrasion by the auxiliary fuel, the fuel blow tube 20 may be formed to have a structure capable of easily detecting damage. Since abrasion intensively occurs in the second tubes 28a and 28b, detection of damage may occur in the second tubes 28a and 28b of the fuel blow tube 20.

In consideration of this, the fuel blow tube 20 includes a protection tube 30 installed outside the second tubes 28a and 28b to surround the second tubes 28a and 28b and seal the second tubes 28a and 28b from the outside.

A manometer 32 detecting an internal pressure of the protection tube 30 is installed in the protection tube 30. The manometer 32 may be exposed to the outside of the tuyere assembly 100 to be easily observed by a worker.

The protection tube 30 extends along the second tubes 28a and 28b to have a length corresponding to those of the second tubes 28a and 28b. Since an interior diameter of the protection tube 30 is larger than exterior diameters of the second tubes 28a and 28b, an internal space is formed between the second tubes 28a and 28b and the protection tube 30. The interior diameter of the protection tube 30 is enough as long as the interior diameter provides a predetermined clearance between the second tubes 28a and 28b, and a size thereof is not particularly limited.

Both front ends of the protection tube 30 are bound to the second tubes 28a and 28b. Accordingly, an internal space of the protection tube 30 is blocked from the outside to form a sealing state. The internal space of the protection tube 30 may be in a vacuum state or a pressure state such as the atmosphere, and is not particularly limited.

The manometer 32 is connected to the internal space of the protection tube 30 to detect a pressure of the internal space.

Accordingly, in the case where the second tubes 28a and 28b are damaged, a gas such as nitrogen or air transporting the auxiliary fuel having a high pressure flows out from the second tubes 28a and 28b through a damaged portion. The transporting gas flowing out from the damaged portion flows into the internal space of the protection tube 30 surrounding the second tubes 28a and 28b to change the pressure of the internal space of the protection tube 30. The pressure of the internal space of the protection tube 30 is detected by the manometer 32. Accordingly, a worker can easily confirm whether the second tubes 28a and 28b are damaged through a pressure change value of the protection tube 30 detected in the manometer 32.

In addition to a detection structure through the pressure, whether the second tubes 28a and 28b are damaged may be detected by using temperature. In the case of this structure, a thermometer detecting the temperature is installed instead of the manometer 32 in the protection tube 30. The thermometer detects the temperature changed by the transporting gas flowing into the internal space of the protection tube 30 when the second tube 28 is damaged. Accordingly, a worker can easily confirm whether the second tubes 28a and 28b are damaged through a temperature change value of the protection tube 30 detected by the thermometer.

FIG. 4 is a view illustrating an exemplary embodiment where the second tube 28b constituting the fuel blow tube 20 is formed in a curve type instead of a straight-line type.

Referring to FIG. 4, the second tube 28b may be formed to have a maximum curvature radius in a range not deviating from the tuyere assembly 100. In this case, a curvature radius R of one end of the second tube 28b is smaller than a curvature radius R' of the other end connected to the first tube 26. That is, the second tube 28b is connected to the first tube 26 while forming almost a straight line at a connection portion thereof, and is positioned in the tuyere assembly 100 to have a shape where the curvature radius is gradually reduced in an external direction of the large tuyere 14.

Abrasion of the fuel blow tube 20 by collision of the auxiliary fuel is converged on a portion where the curvature is largest. Accordingly, abrasion of the second tube 28b by collision of the auxiliary fuel may be maximally reduced by allowing a combination portion to have the maximal curvature radius as possible when the second tube 28b is combined with the first tube 26 in the tuyere assembly 100.

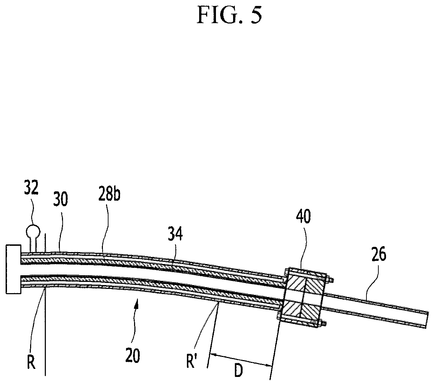

Meanwhile, FIG. 5 illustrates a connection portion of the fuel blow tube 20 in more detail. As illustrated in FIG. 5, the second tube 28b may include a straight-line section D straightly formed at an end connected to the first tube 26. A curved portion of the second tube 28b starts while passing through the straight-line section D and is formed to an external front end of the large tuyere 14.

An extension direction of the second tube 28b is identical with an extension direction of the first tube 26 at a connection place of the second tube 28b and the first tube 26 by the straight-line section D. Accordingly, the first tube 26 and the straight-line section D form a straight-line passing through the same axis line based on the connection place of the second tube 28b and the first tube 26. Accordingly, the auxiliary fuel straightly passes through front and rear sides based on the connection place of the first tube 26 and the second tube 28b without a change of a progress direction to minimize an abrasion phenomenon at the connection place.

The straight-line section D is formed to have a length of 100 mm or more from a connection place with the first tube 26. In the case where the length of the straight-line section D is 100 mm or less, since the straight-line section D is very short, an effect thereof is not sufficiently exhibited.

Further, in the present exemplary embodiment, in the case where the fuel blow tube 20 is damaged due to abrasion by the auxiliary fuel, the fuel blow tube 20 has a structure easily detecting damage. Since abrasion intensively occurs at a portion that is curved in an arc form, detection of damage may be performed in the second tube 28b of the fuel blow tube 20.

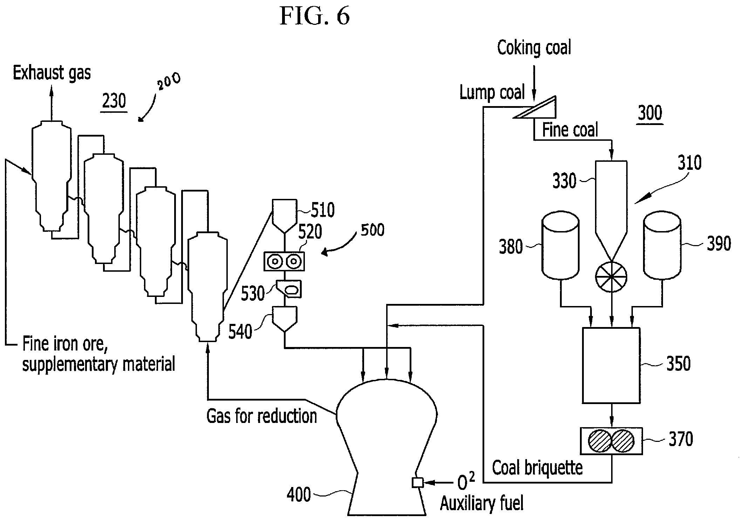

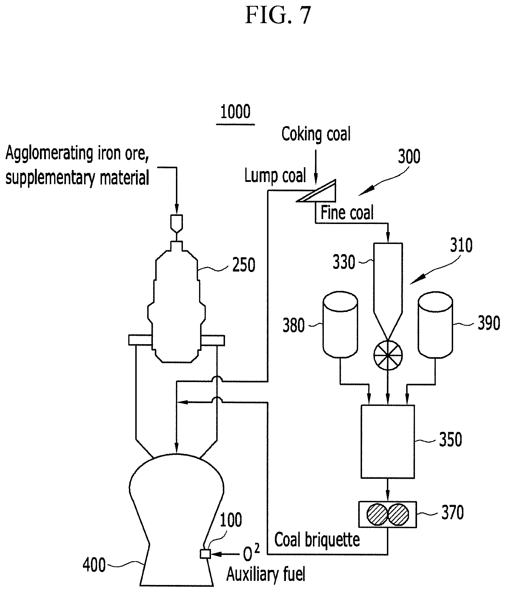

FIGS. 6 and 7 are views illustrating a constitution of an apparatus 1000 of manufacturing an ingot iron including a melting gasifier 400 in which a tuyere assembly 100 according to another exemplary embodiment of the present invention is installed.

To be more specific, FIG. 6 illustrates the constitution of the apparatus 1000 of manufacturing the ingot iron according to another exemplary embodiment of the present invention, and the apparatus 1000 of manufacturing the ingot iron includes a multi-stage fluidized-reduction furnace 230, the melting gasifier 400 to which the tuyere assembly 100 of the present invention is applied, a coal briquette manufacturing apparatus 310, and an agglomerating body manufacturing apparatus 500.

The apparatus 1000 of manufacturing the ingot iron according to another exemplary embodiment of the present invention includes a reduction furnace 200 converting an iron ore-containing mixture into a reduced material by reduction, a coal supply apparatus 300 supplying an agglomerating breeze as a heat source melting the reduced material, a melting gasifier 400 connected to the reduction furnace 200 to charge the reduced material thereinto, connected to the coal supply apparatus 300 to charge the agglomerating breeze thereinto, and manufacturing the ingot iron by blowing oxygen and an auxiliary fuel through a tuyere assembly 100 installed in a side thereof, and a reduction gas supply tube supplying a reduction gas which is generated from a volatile matter included in the agglomerating breeze and the auxiliary fuel in the melting gasifier 400 to the reduction furnace 200.

The reduction furnace 200 illustrated in FIG. 6 is a fluidized-bed type reduction furnace 230.

The iron ore-containing mixture includes an iron ore, and supplementary materials such as limestone and dolomite.

The agglomerating breeze is used as a heat source for melting the reduced material, and includes a volatile matter such as carbon and hydrogen and the lump coal comes into contact with a high temperature gas to be dried and then used in the course of sorting a coking coal into the fine coal and the lump coal.

Further, the agglomerating breeze includes the lump coal or a coal briquette, and the coal briquette is manufactured by mixing the fine coal generated in the course of sorting the coking coal with a curing agent and a binder.

The aforementioned tuyere assemblies of various exemplary embodiments may be used as the tuyere assembly 100.

In the melting gasifier 400, pure oxygen at normal temperature and the auxiliary fuel such as a powdered coal are blown through the tuyere assembly 100 installed on a side wall of a lower portion of the melting gasifier to combust the auxiliary fuel and the agglomerating breeze to generate a reduction gas such as carbon monoxide (CO) and hydrogen (H₂) and melt the reduced material by heat generated by combustion of the breeze, and thus a molten iron is manufactured.

Further, the reduction gas generated in the melting gasifier 400 is blown into the reduction furnace 200 and thus used to reduce the iron ore-containing mixture.

The coal briquette that is the agglomerating breeze is supplied by the coal supply apparatus 300, and the coal supply apparatus 300 includes the coal briquette manufacturing apparatus 310 supplying the coal briquette manufactured by molding the fine coal generated in the course of sorting the coking coal into the lump coal and the fine coal.

Further, the coal briquette manufacturing apparatus 310 includes a fine coal storage bin 330 storing the fine coal, a mixer 350 connected to the fine coal storage bin 330 to receive a molasses binder and the curing agent and perform mixing to form a mixed coal, and a molding machine 370 connected to the mixer 350 to mold the mixed coal to manufacture the coal briquette.

The coal briquette manufacturing apparatus 310 further includes a binder bin 380 providing the molasses binder, and a curing agent bin 390 supplying one or more curing agents selected from the group consisting of quick lime, slaked lime, limestone, calcium carbonate, cement, bentonite, clay, silica, silicate, dolomite, phosphoric acid, sulfuric acid, and oxide in addition to the binder bin 380, and the binder bin 380 and the curing agent bin 390 are connected to the mixer 350.

The coal briquette is manufactured by adding the molasses binder and the curing agent to the fine coal and performing mixing, and if quick lime (CaO) that is one of the curing agents is mixed with the fine coal, moisture remaining in the fine coal is reacted with quick lime (CaO) to be converted into slaked lime [(Ca(OH)₂] by a chemical reaction such as the following Chemical Formula 1 and moisture is removed by a strong exothermic reaction.

According to removal of moisture, there is an advantage in that molding is performed well during a subsequent process and constant strength is ensured.

<Chemical Formula 1> CaO + H₂O → Ca (OH)₂

As described above, if moisture is removed and the molasses binder is used as a binder, strength of the coal briquette may be improved and the molasses binder may be prevented from being dissolved in moisture due to a chemical reaction of binding of calcium saccharate of quick lime and the molasses binder.

Further, in the present invention, when the coal briquette is formed, the curing agent may be added together with the molasses binder.

It is preferable to add and mix 1 to 5 parts by weight of the curing agent based on 100 parts by weight of the fine coal, and it is preferable to add and mix 5 to 15 parts by weight of the molasses binder based on 100 parts by weight of the fine coal.

The apparatus 1000 of manufacturing the ingot iron further includes the agglomerating body manufacturing apparatus 500 connected to the reduction furnace 200 to agglomerate the reduced material, and the agglomerating body (hot compacted iron; HCl) manufactured in the agglomerating body manufacturing apparatus 500 is supplied to the melting gasifier 400.

To be more specific, the agglomerating body manufacturing apparatus 500 includes a charge hopper 510 for temporarily storing a reduced iron and then charging the reduced iron into a pair of rolls 520 before the reduced iron reduced in the fluidized-bed type reduction furnace 230 to be discharged is agglomerated by a pair of rolls 520, a pair of rolls 520 for agglomerating the reduced iron discharged from the charge hopper 510 at high temperatures, a pulverizer 530 for pulverizing the agglomerated reduced iron, and a reduced iron storage bath 540 for storing the pulverized agglomerated reduced iron (agglomerating body) before charging the pulverized agglomerated reduced iron into a melting reduction furnace 400.

The reduction furnace 200 is the sequentially connected multi-stage fluidized-bed type reduction furnace 230. By disposing the reduction furnace 200 in a multi-stage form, for example, a fine iron ore having a small particle size of the iron ore-containing mixture may be heated to a predetermined temperature together with supplementary materials such as limestone and dolomite in a fluidized-bed reactor into which the fine iron ore is initially charged, pre-reduced in a subsequent pre-reduction furnace, and finally reduced in a final reduction furnace to manufacture the reduced iron having an excellent reduction ratio.

FIG. 7 illustrates a constitution of the apparatus 1000 of manufacturing the ingot iron according to another exemplary embodiment of the present invention, and the apparatus of manufacturing the ingot iron includes a filling layer type reduction furnace 250, a melting gasifier 400 to which the tuyere assembly 100 of the present invention is applied, and a coal briquette manufacturing apparatus 310.

The reduction furnace 200 is the filling layer type reduction furnace 250. In the case where the particle size of the iron ore-containing mixture is relatively large, for example, an agglomerating iron ore may be charged together with the supplementary materials such as limestone and dolomite into the filling layer type reduction furnace 250, and the reduction gas generated in the melting gasifier 400 may be blown to a lower portion of the reduction furnace to reduce the iron ore by the reduction gas, thereby producing the reduced iron.

The reduced iron and the agglomerating breeze are charged from an upper portion of the melting gasifier 400 to manufacture the ingot iron in the melting gasifier 400 and then discharge the ingot iron to the outside. Herein, the agglomerating breeze may be charged as the coal briquette. The coal briquette is charged into the melting gasifier 400 to form a char bed, generate the reduction gas, and emit the reduction gas to the outside. The char bed is combusted by the oxygen-containing gas blown through the tuyere assembly 100 to generate combustion heat, and the reduced iron is melted by combustion heat to manufacture the ingot iron.

The reduction gas discharged from the melting gasifier 400 may flow into the fluidized-bed type reduction furnace 230 or the filling layer type reduction furnace 250 to reduce the iron ore charged into the fluidized-bed type reduction furnace 230 or the filling layer type reduction furnace 250, thereby manufacturing the reduced iron.

In the present invention, the oxygen-containing gas and the auxiliary fuel may be blown through the tuyere assembly 100 to increase combustion heat in the melting gasifier 400 and thus reduce an amount of the lump coal or the coal briquette charged from the upper portion of the melting gasifier 400. Herein, the auxiliary fuel may be blown through the fuel blow tube 20 of the present exemplary embodiment to be combusted at a position that is maximally close to an internal front end of the tuyere, thereby largely improving a combustion property of the auxiliary fuel.

Hereinafter, the present invention will be described in more detail through Experimental Examples. The Experimental Examples are set forth just to illustrate the present invention but are not to be construed to limit the present invention.

### <Example 1>

The powdered coal was blown as the auxiliary fuel into the melting gasifier by using the tuyere assembly having the structure formed of the two-pieced tube illustrated in FIG. 1. The powdered coal was blown through the fuel blow tube of the tuyere assembly into the melting gasifier. Further, pure oxygen was blown through the gas blow flow channel of the tuyere assembly into the melting gasifier. By forming the second tube in the straight-line form in the fuel blow tube, even though the fuel blow tube was installed in the tuyere, the slope of the first tube positioned in the small tuyere to the gas channel could be increased. Accordingly, the first tube had the acute angle of 7.5 to the gas channel, and the combustion focus at which the powdered coal and oxygen met was formed to be spaced apart from the internal front end of the tuyere by 270 mm.

Meanwhile, according to formation of the second tube in the straight-line form, the flow channel of the powdered coal through the fuel blow tube was rapidly changed at the connection portion connected to the first tube, and thus a phenomenon where abrasion was focused on the connection portion as the operation progressed occurred.

### <Example 2>

The powdered coal was blown as the auxiliary fuel into the melting gasifier by using the tuyere assembly having the structure formed of the two-pieced tube illustrated in FIG. 3. The powdered coal was blown through the fuel blow tube of the tuyere assembly into the melting gasifier. Further, pure oxygen was blown through the gas blow flow channel of the tuyere assembly into the melting gasifier. By curving the second tube in the arc form in the fuel blow tube, even though the fuel blow tube was installed in the tuyere, the slope of the first tube positioned in the small tuyere to the gas channel could be increased. Accordingly, the first tube had the acute angle of 7.5 to the gas channel, and the combustion focus at which the powdered coal and oxygen met was formed to be spaced apart from the internal front end of the tuyere by 270 mm. The replacement period of the fuel blow tube could be prolonged by forming the second tube of the fuel blow tube in the curve form as compared to the case where the second tube was formed in the straight-line form.

### <Comparative Example>

Unlike the Experimental Examples, the powdered coal was blown into the melting gasifier by using the tuyere assembly where the fuel blow tube was installed in the existing one-pieced straight-line form. The powdered coal was blown through the fuel blow tube into the melting gasifier. Further, pure oxygen was blown through the gas blow flow channel of the tuyere assembly into the melting gasifier. The acute angle of the fuel blow tube to the gas channel of the gas blow flow channel was 6 , and the combustion focus at which the powdered coal and oxygen met was formed to be spaced apart from the front end of the tuyere by 340 mm.

As seen from the aforementioned Experimental Examples and Comparative Example, it could be confirmed that in the Experimental Examples, the distance of the combustion focus was shortened from the front end of the tuyere by 20% or more as compared to the Comparative Example.

Accordingly, in the case where the fuel blow tube of the Experimental Examples was used, the combustion property of the powdered coal was improved as compared to the Comparative Example to largely increase the powdered coal blowing amount.

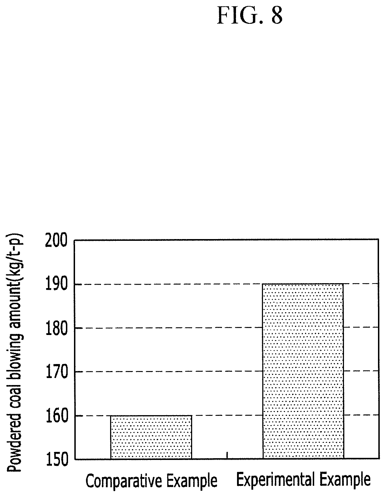

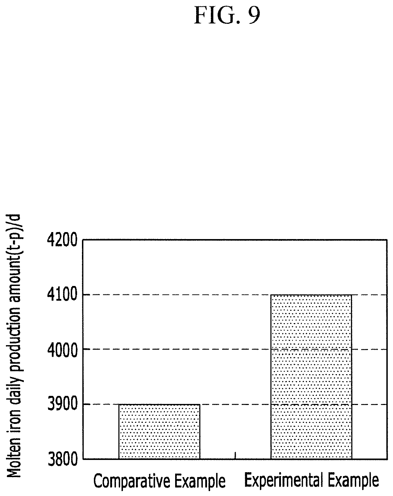

FIGS. 8 and 9 are graphs illustrating comparison of the powdered coal blowing amounts and the molten iron production amounts of the Experimental Examples and the Comparative Example.

As illustrated in the drawings, in the case of the Comparative Example, the powdered coal blowing amount was just about 160 kg/t-p per a ton of the molten iron, but in the case of the Experimental Examples to which the fuel blow tube curved in the arc form was applied, the powdered coal blowing amount was increased by 19% to 190 kg/t-p per a ton of the molten iron. Further, it could be confirmed that the molten iron production amount was increased in the Experimental Examples as compared to the Comparative Example.

Accordingly, in the case where the fuel blow tube of the Experimental Examples was used, combustion efficiency of the powdered coal blown through the tuyere assembly into the melting gasifier was further improved, and the fuel blow tube of the Experimental Examples was very effective to increase the production amount in the molten iron production operation.

As described above, exemplary embodiments of the present invention have been illustrated and described, but various modifications and other exemplary embodiments may be performed by those skilled in the art. The modifications and the other exemplary embodiments are all considered and included in the appended claims, which fall within the scope of the present invention.

## Claims

1. A tuyere assembly (100) installed in a melting gasifier (400) for manufacturing an ingot iron, comprising:
a gas blow flow channel (12) blowing an oxygen-containing gas into the melting gasifier (400); and a fuel blow tube (20) installed to be spaced apart from the gas blow flow channel (12) and blowing an auxiliary fuel into the melting gasifier (400),
wherein the tuyere assembly (100) includes a small tuyere (16) disposed to be adjacent to an inside of the melting gasifier (400) and a large tuyere (14) disposed to be adjacent to an outside of the melting gasifier (400),
wherein the fuel blow tube (20) includes a first tube (26) inserted into the small tuyere (16), in which a portion of the first tube (26) protrudes in a large tuyere (14) direction; and a second tube (28a, 28b) inserted into the large tuyere (14) and connected to a protrusion portion of the first tube (26),
wherein the second tube (28a, 28b) is connected to the protrusion portion of the first tube (26), and is connected in an internal space of the large tuyere (14) by a flange (40) or a socket,
wherein the flange (40) or the socket forms a point of inflection between the first tube (26) and the second tube (28a, 28).

2. The tuyere assembly (100) of claim 1, wherein:
the second tube (28a, 28b) is a straight-line type or a curve type.

3. The tuyere assembly (100) of claim 2, wherein:
the angle formed by the first tube (26) and the gas blow flow channel (12) is an acute angle (α).

4. The tuyere assembly (100) of claim 2, wherein:
the second tube (28a, 28b) is connected to the protrusion portion of the first tube (26), and has a straight-line section straightly formed at a connection portion.

5. The tuyere assembly (100) of claim 4, wherein:
a curvature radius of the second tube (28a, 28b) is gradually decreased from an end point of a straight-line portion to an external front end of the large tuyere (14).

6. The tuyere assembly (100) of claim 1, wherein:
the second tube (28a, 28b) includes a protection tube (30) having a structure which surrounds an external circumferential portion of the second tube (28a, 28b) to be spaced apart and is sealed from the outside.

7. The tuyere assembly (100) of claim 6, wherein:
in the protection tube (30), a manometer (32) for detecting an internal pressure or a thermometer detecting an internal temperature of the protection tube (30) is formed.

8. The tuyere assembly (100) of claim 1, wherein:
on an interior circumferential surface of the second tube (28a, 28b), an abrasion resistant liner is formed.

9. An apparatus of manufacturing an ingot iron (1000) comprising a tuyere assembly according to any of claims 1 to 8, the apparatus further comprising:
a reduction furnace (200) converting an iron ore-containing mixture into a reduced material by reduction;
a coal supply apparatus (300) supplying an agglomerating breeze as a heat source melting the reduced material;
a melting gasifier (400) connected to the reduction furnace (200) to charge the reduced material thereinto, connected to the coal supply apparatus (300) to charge the agglomerating breeze thereinto, and manufacturing the ingot iron by blowing oxygen and an auxiliary fuel through the tuyere assembly installed in a side thereof; and
a reduction gas supply tube supplying a reduction gas which is generated from a volatile matter included in the agglomerating breeze and the auxiliary fuel in the melting gasifier (400) to the reduction furnace (200).

10. The apparatus (1000) of claim 9, wherein:
the coal supply apparatus (300) includes a coal briquette manufacturing apparatus (310) supplying a coal briquette manufactured by molding a fine coal.

11. The apparatus (1000) of claim 10, wherein:
the coal briquette manufacturing apparatus (310) includes:
a fine coal storage bin (330) storing the fine coal;
a mixer (350) connected to the fine coal storage bin (330) to receive a molasses binder and perform mixing to form a mixed coal; and
a molding machine (370) connected to the mixer (350) to mold the mixed coal to manufacture the coal briquette.

12. The apparatus (1000) of claim 11, wherein:
the coal briquette manufacturing apparatus (310) further includes:
a binder bin (380) providing the molasses binder; and
a curing agent bin (390) supplying one or more curing agents selected from the group consisting of quick lime, slaked lime, limestone, calcium carbonate, cement, bentonite, clay, silica, silicate, dolomite, phosphoric acid, sulfuric acid, and oxide in addition to the binder bin (380), and
the binder bin (380) and the curing agent bin (390) are connected to the mixer (350).

13. The apparatus (1000) of claim 9, further comprising:
an agglomerating body manufacturing apparatus (500) connected to the reduction furnace (200) to agglomerate the reduced material,
wherein an agglomerating body manufactured in the agglomerating body manufacturing apparatus (500) is supplied to the melting gasifier (400).

14. The apparatus (1000) of claim 9, wherein:
the reduction furnace (200) includes sequentially connected multi-stage fluidized-reduction furnaces (230).

15. The apparatus (1000) of claim 9, wherein:
the reduction furnace (200) is a filling layer type reduction furnace (250).

## Patentansprüche

1. Windform-Baugruppe (100), die in einem Einschmelzvergaser (400) zum Herstellen eines entkohlten Stahls eingebaut ist, wobei sie Folgendes umfasst:
einen Gasblasströmungskanal (12), der ein sauerstoffhaltiges Gas in den Einschmelzvergaser (400) bläst, und eine Brennstoffblasröhre (20), die so eingebaut ist, dass sie von dem Gasblasströmungskanal (12) beabstandet ist und einen Hilfsbrennstoff in den Einschmelzvergaser (400) bläst,
wobei die Windform-Baugruppe (100) eine kleine Windform (16) einschließt, die so angeordnet ist, dass sie einer Innenseite des Einschmelzvergasers (400) benachbart ist, und eine große Windform (14), die so angeordnet ist, dass sie einer Außenseite des Einschmelzvergasers (400) benachbart ist,
wobei die Brennstoffblasröhre (20) eine erste Röhre (26) umfasst, die in die kleine Windform (16) eingesetzt ist, wobei ein Abschnitt der ersten Röhre (26) in einer Richtung der großen Windform (14) vorspringt, und sie eine zweite Röhre (28a, 28b) umfasst, die in die große Windform (14) eingesetzt und mit einem Vorsprungsabschnitt der ersten Röhre (26) verbunden ist,
wobei die zweite Röhre (28a, 28b) mit dem Vorsprungsabschnitt der ersten Röhre (26) verbunden ist und in einem Innenraum der großen Windform (14) durch einen Flansch (40) oder eine Fassung verbunden ist,
wobei der Flansch (40) oder die Fassung einen Knickpunkt zwischen der ersten Röhre (26) und der zweiten Röhre (28a, 28b) bildet.

2. Windform-Baugruppe (100) nach Anspruch 1, wobei:
die zweite Röhre (28a, 28b) von einer geradlinigen Art oder einer gekrümmten Art ist.

3. Windform-Baugruppe (100) nach Anspruch 2, wobei:
der durch die erste Röhre (26) und den Gasblasströmungskanal (12) gebildete Winkel ein spitzer Winkel (α) ist.

4. Windform-Baugruppe (100) nach Anspruch 2, wobei:
die zweite Röhre (28a, 28b) mit dem Vorsprungsabschnitt der ersten Röhre (26) verbunden ist und eine geradlinige Sektion hat, die gerade an einem Verbindungsabschnitt geformt ist.

5. Windform-Baugruppe (100) nach Anspruch 4, wobei:
ein Krümmungsradius der zweiten Röhre (28a, 28b) allmählich von einem Endpunkt eines geradlinigen Abschnitts bis zu einem äußeren vorderen Ende der großen Windform (14) vermindert ist.

6. Windform-Baugruppe (100) nach Anspruch 1, wobei:
die zweite Röhre (28a, 28b) eine Schutzröhre (30) einschließt, die eine Struktur hat, die einen Außenumfangsabschnitt der zweiten Röhre (28a, 28b) so umgibt, dass sie beabstandet ist, und gegenüber der Außenseite abgedichtet ist.

7. Windform-Baugruppe (100) nach Anspruch 6, wobei:
in der Schutzröhre (30) ein Manometer (32) zum Erfassen eines Innendrucks oder ein Thermometer, das eine Innentemperatur der Schutzröhre (30) erfasst, geformt ist.

8. Windform-Baugruppe (100) nach Anspruch 1, wobei:
auf einer Innenumfangsfläche der zweiten Röhre (28a, 28b) eine abriebbeständige Auskleidung geformt ist.

9. Vorrichtung (1000) zum Herstellen eines entkohlten Stahls, die eine Windform-Baugruppe nach einem der Ansprüche 1 bis 8 umfasst, wobei die Vorrichtung ferner Folgendes umfasst:
einen Reduktionsofen (200), der ein eisenerzhaltiges Gemisch durch Reduktion zu einem reduzierten Material umwandelt,
eine Kohlezufuhrvorrichtung (300), die ein agglomerierendes Kohlenklein als eine Wärmequelle, die das reduzierte Material schmilzt, zuführt,
einen Einschmelzvergaser (400), der mit dem Reduktionsofen (200) verbunden ist, um das reduzierte Material in denselben zu beschicken; der mit der Kohlezufuhrvorrichtung (300) verbunden ist, um das agglomerierende Kohlenklein in denselben zu beschicken, und der durch das Blasen von Sauerstoff und einem Hilfsbrennstoff durch die in einer Seite desselben eingebaute Windform-Baugruppe den entkohlten Stahl herstellt, und
eine Reduktionsgas-Zufuhrröhre, die ein Reduktionsgas, das aus einem flüchtigen Material, das in dem agglomerierenden Kohlenklein und dem Hilfsbrennstoff eingeschlossen ist, in dem Einschmelzvergaser (400) erzeugt wird, dem Reduktionsofen (200) zuführt.

10. Vorrichtung (1000) nach Anspruch 9, wobei:
die Kohlezufuhrvorrichtung (300) eine Kohlebrikett-Herstellungsvorrichtung (310) einschließt, die ein Kohlebrikett zuführt, das durch das Formen einer Feinkohle hergestellt wird.

11. Vorrichtung (1000) nach Anspruch 10, wobei:
die Kohlebrikett-Herstellungsvorrichtung (310) Folgendes einschließt:
einen Feinkohle-Vorratsbunker (330), der die Feinkohle lagert,
einen Mischer (350), der mit dem Feinkohle-Vorratsbunker (330) verbunden ist, um ein Melasse-Bindemittel aufzunehmen und das Mischen durchzuführen, um eine gemischte Kohle herzustellen, und
eine Formmaschine (370), die mit dem Mischer (350) verbunden ist, um die gemischte Kohle zu formen, um das Kohlebrikett herzustellen.

12. Vorrichtung (1000) nach Anspruch 11, wobei:
die Kohlebrikett-Herstellungsvorrichtung (310) ferner Folgendes einschließt:
einen Bindemittelbunker (380), der das Melasse-Bindemittel bereitstellt, und
einen Härtungsmittelbunker (390), der ein oder mehrere Härtungsmittel, die aus der Gruppe ausgewählt sind, die aus Branntkalk, gelöschtem Kalk, Kalkstein, Kalziumkarbonat, Zement, Bentonit, Ton, Siliziumdioxid, Silikat, Dolomit, Phosphorsäure, Schwefelsäure und Oxid besteht, zusätzlich dem Bindemittelbunker (380) zuführt, und
wobei der Bindemittelbunker (380) und der Härtungsmittelbunker (390) mit dem Mischer (350) verbunden sind.

13. Vorrichtung (1000) nach Anspruch 9, die ferner Folgendes umfasst:
eine Agglomerationskörper-Herstellungsvorrichtung (500), die mit dem Reduktionsofen (200) verbunden ist, um das reduzierte Material zu agglomerieren,
wobei ein in der Agglomerationskörper-Herstellungsvorrichtung (500) hergestellter Agglomerationskörper dem Einschmelzvergaser (400) zugeführt wird.

14. Vorrichtung (1000) nach Anspruch 9, wobei:
der Reduktionsofen (200) nacheinander verbundene mehrstufige Wirbelschicht-Reduktionsöfen (230) einschließt.

15. Vorrichtung (1000) nach Anspruch 9, wobei:
der Reduktionsofen (200) ein Reduktionsofen vom Füllschicht-Typ (250) ist.

## Revendications

1. Ensemble tuyère (100) installé dans un gazéifieur à fusion (400) pour fabriquer un fer doux, comprenant :
un canal d'écoulement à soufflage de gaz (12) soufflant un gaz contenant de l'oxygène dans le gazéifieur à fusion (400) ; et un tube de soufflage de combustible (20) installé pour être espacé du canal d'écoulement à soufflage de gaz (12) et soufflant un combustible auxiliaire dans le gazéifieur à fusion (400),
dans lequel l'ensemble tuyère (100) inclut une petite tuyère (16) disposée pour être adjacente à un intérieur du gazéifieur à fusion (400) et une grande tuyère (14) disposée pour être adjacente à un extérieur du gazéifieur à fusion (400),
dans lequel le tube de soufflage de combustible (20) inclut un premier tube (26) inséré dans la petite tuyère (16), dans laquelle une portion du premier tube (26) dépasse dans une direction de la grande tuyère (14) ; et un second tube (28a, 28b) inséré dans la grande tuyère (14) et raccordé à une portion de dépassement du premier tube (26),
dans lequel le second tube (28a, 28b) est raccordé à la portion de dépassement du premier tube (26), et est raccordé dans un espace interne de la grande tuyère (14) par une collerette (40) ou un emboîtement,
dans lequel la collerette (40) ou l'emboîtement forme un point d'inflexion entre le premier tube (26) et le second tube (28a, 28).

2. Ensemble tuyère (100) selon la revendication 1, dans lequel :
le second tube (28a, 28b) est de type droite ou de type courbe.

3. Ensemble tuyère (100) selon la revendication 2, dans lequel :
l'angle formé par le premier tube (26) et le canal d'écoulement à soufflage de gaz (12) est un angle aigu (α).

4. Ensemble tuyère (100) selon la revendication 2, dans lequel :
le second tube (28a, 28b) est raccordé à la portion de dépassement du premier tube (26), et a une section de droite formée rectilignement au niveau d'une portion de raccordement.

5. Ensemble tuyère (100) selon la revendication 4, dans lequel :
un rayon de courbure du second tube (28a, 28b) diminue progressivement d'un point d'extrémité d'une portion de droite à une extrémité avant externe de la grande tuyère (14).

6. Ensemble tuyère (100) selon la revendication 1, dans lequel :
le second tube (28a, 28b) inclut un tube de protection (30) ayant une structure qui entoure une portion circonférentielle externe du second tube (28a, 28b) à espacer et est obturé depuis l'extérieur.

7. Ensemble tuyère (100) selon la revendication 6, dans lequel :
dans le tube de protection (30), un manomètre (32) pour détecter une pression interne ou un thermomètre détectant une température interne du tube de protection (30) est formé.

8. Ensemble tuyère (100) selon la revendication 1, dans lequel :
sur une surface circonférentielle intérieure du second tube (28a, 28b) est formée une doublre résistant à l'abrasion.

9. Appareil de fabrication d'un fer doux (1000) comprenant un ensemble tuyère selon l'une quelconque des revendications 1 à 8, l'appareil comprenant en outre :
un four de réduction (200) convertissant un mélange contenant un minerai de fer en un matériau réduit par réduction ;
un appareil de fourniture de charbon (300) fournissant un poussier agglomérant en tant que source de chaleur faisant fondre le matériau réduit ;
un gazéifieur à fusion (400) raccordé au four de réduction (200) pour y charger le matériau réduit, raccordé à l'appareil de fourniture de charbon (300) pour y charger le poussier agglomérant, et fabriquant le fer doux par soufflage d'oxygène et d'un combustible auxiliaire à travers l'ensemble tuyère installé dans un côté de celui-ci ; et
un tube de fourniture de gaz de réduction fournissant un gaz de réduction qui est généré à partir d'une matière volatile incluse dans le poussier agglomérant et le combustible auxiliaire dans le gazéifieur à fusion (400) au four de réduction (200).

10. Appareil (1000) selon la revendication 9, dans lequel :
l'appareil de fourniture de charbon (300) inclut un appareil de fabrication de briquette de charbon (310) fournissant une briquette de charbon fabriquée par moulage d'un charbon fin.

11. Appareil (1000) selon la revendication 10, dans lequel :
l'appareil de fabrication de briquette de charbon (310) inclut :
une benne de stockage de charbon fin (330) stockant le charbon fin ;
un mélangeur (350) raccordé à la benne de stockage de charbon fin (330) pour recevoir un liant de mélasse et réaliser un mélange pour former un charbon mélangé ; et
une machine de moulage (370) raccordée au mélangeur (350) pour mouler le charbon mélangé en vue de fabriquer la briquette de charbon.

12. Appareil (1000) selon la revendication 11, dans lequel :
l'appareil de fabrication de briquette de charbon (310) inclut en outre :
une benne à liant (380) fournissant le liant de mélasse ; et
une benne à agent de durcissement (390) fournissant un ou plusieurs agents de durcissement choisis dans le groupe consistant en la chaux vive, la chaux éteinte, le calcaire, le carbonate de calcium, le ciment, la bentonite, l'argile, la silice, le silicate, la dolomite, l'acide phosphorique, l'acide sulfurique et un oxyde en plus de la benne à liant (380), et
la benne à liant (380) et la benne à agent de durcissement (390) sont raccordés au mélangeur (350).

13. Appareil (1000) selon la revendication 9, comprenant en outre :
un appareil de fabrication de corps agglomérant (500) raccordé au four de réduction (200) pour agglomérer le matériau réduit,
dans lequel un corps agglomérant fabriqué dans l'appareil de fabrication de corps agglomérant (500) est fourni au gazéifieur à fusion (400).

14. Appareil (1000) selon la revendication 9, dans lequel :
le four de réduction (200) inclut des fours de réduction fluidisée multiétages raccordés séquentiellement (230).

15. Appareil (1000) selon la revendication 9, dans lequel :
le four de réduction (200) est un four de réduction de type à couche de remplissage (250).
